# DEMANDE DE BREVET EUROPEEN

(11) **EP 2 141 341 A1**
(43) Date de publication de la demande: **06.01.2010**
(21) Numéro de dépôt: 09290389.7
(22) Date de dépôt: 20.05.2009
(51) Int. Cl.: F02D 13/02, F02M 25/07

(54) **Procédé pour améliorer la vaporisation d'un carburant utilisé pour un moteur à combustion interne, notamment à injection directe, en particulier à autoallumage et plus particulièrement de type Diesel**

(30) Priorité: 03.07.2008 FR 0803783
(71) Demandeur: IFP, 92852 Rueil-Malmaison Cédex (FR)
(72) Inventeur: Mendez, Sylvain, 75012 Paris (FR); Walter, Bruno, 929700 Colombes (FR)

(57) **Abrégé**

La présente invention concerne un procédé pour améliorer la vaporisation d'un carburant utilisé pour un moteur pouvant fonctionner selon un mode conventionnel et/ou selon un mode au moins en partie homogène, ledit moteur comportant au moins un cylindre (10), une chambre de combustion (18), au moins une soupape d'admission (26) associée à un tubulure d'admission (28), au moins une soupape d'échappement (32) avec une tubulure d'échappement (34), des moyens de contrôle (36, 38) en ouverture/fermeture des soupapes et des moyens d'injection de carburant (40, 44).

Selon l'invention, le procédé consiste, à la fin de la phase d'échappement, à réaliser au moins une injection de carburant dans la tubulure d'échappement (34) pour y produire un mélange carburé avec les gaz d'échappement ; au début de la phase d'admission, à introduire le mélange ainsi formé dans la chambre de combustion (18) par au moins une réouverture de la soupape échappement ; avant la fin de la phase d'admission, à introduire dans ladite chambre un fluide d'admission par la tubulure d'admission (28) et à y injecter du carburant ; avant la fin de la phase d'admission, à fermer la soupape d'échappement (32) et à arrêter l'injection de carburant dans la tubulure d'échappement ; à la fin de la phase d'admission, à fermer la soupape d'admission (26).

## Description

La présente invention se rapporte à un procédé pour améliorer la vaporisation d'un carburant utilisé pour un moteur à combustion interne, notamment à injection directe, en particulier à autoallumage et plus particulièrement de type Diesel.

En particulier, cette invention concerne un moteur à injection directe de type Diesel pouvant fonctionner selon deux modes de combustion, un mode au moins en partie homogène et/ou un mode conventionnel.

Le fonctionnement selon le mode au moins en partie homogène, qui est préférentiellement utilisé pour les faibles et moyennes charges du moteur, consiste à injecter du carburant dans la chambre de combustion de façon très précoce (par exemple pendant la phase d'admission du moteur) de façon à obtenir un mélange essentiellement homogène du carburant avec un fluide, comme de l'air ou un mélange d'air et de gaz d'échappement recirculés (EGR).

Pour le fonctionnement avec un mode conventionnel, préférentiellement utilisé aux charges élevées du moteur, une injection du carburant est réalisée autour du point mort haut compression du piston et une combustion classique par autoinflammation puis par diffusion se produit.
Durant ce fonctionnement en mode conventionnel, il peut être également envisagé de réaliser une injection très précoce de carburant, par exemple en début de phase d'admission.

En mode au moins en partie homogène, il est avantageux que l'injection de carburant se produise très tôt dans le cycle de fonctionnement du moteur dans le but d'obtenir un mélange essentiellement homogène mais des risques de mouillage de la paroi du cylindre par le carburant injecté existent en entraînant une possible détérioration du film d'huile.
Ainsi, une injection de carburant en début de phase d'admission a pour avantage de pouvoir confiner le carburant injecté dans le bol que comporte habituellement le piston d'un tel moteur Diesel en limitant le contact de ce carburant avec la paroi du cylindre. Cependant, la température du fluide contenu dans la chambre de combustion n'est pas suffisante et le carburant injecté dans ce bol, et par la suite dans la chambre de combustion, peut difficilement se vaporiser.

Dans le mode de fonctionnement conventionnel, l'injection précoce entraîne les mêmes inconvénients relatifs aux difficultés de vaporisation du carburant injecté et aux risques de mouillage de la paroi du cylindre que ceux précédemment mentionnés.

Cette difficulté pour vaporiser le carburant peut entraîner des perturbations dans le déroulement de la combustion du mélange carburé ainsi qu'une augmentation des rejets de polluants dans l'atmosphère et une surconsommation de carburant.

Une meilleure vaporisation de carburant a essentiellement pour avantage de réduire les émissions d'oxydes de carbone (CO) et d'hydrocarbures imbrûlés (HC) lors de la combustion du mélange carburé et des suies.

La présente invention se propose de remédier aux inconvénients ci-dessus mentionnés grâce à un procédé utilisant les éléments habituellement présents dans un moteur à injection directe pour améliorer de manière significative la vaporisation du carburant pendant le fonctionnement en mode au moins en partie homogène de ce moteur ou pendant l'injection précoce lors du fonctionnement de ce moteur en mode conventionnel.

A cet effet, l'invention concerne un procédé pour améliorer la vaporisation d'un carburant utilisé pour un moteur à combustion interne, pouvant fonctionner selon un mode conventionnel et/ou selon un mode au moins en partie homogène avec une phase d'admission, de compression, de combustion et d'échappement, ledit moteur comportant au moins un cylindre, une chambre de combustion, des moyens d'admission avec au moins une soupape d'admission associée à une tubulure d'admission, des moyens d'échappement avec au moins une soupape d'échappement et une tubulure d'échappement, des moyens de contrôle en ouverture/fermeture des soupapes et des moyens d'injection de carburant, **caractérisé en ce qu**'il consiste :
- à la fin de la phase d'échappement, à réaliser au moins une injection de carburant dans la tubulure d'échappement pour y produire un mélange avec les gaz d'échappement,
- au début de la phase d'admission, à introduire au moins partiellement le mélange ainsi formé dans la chambre de combustion,
- avant la fin de la phase d'admission, à fermer la soupape d'échappement,
- à la fin de la phase d'admission, à fermer la soupape d'admission.

Le procédé peut consister à fermer la soupape d'échappement à la fin de la phase d'échappement et à introduire au moins partiellement le mélange, au début de la phase d'admission, lors d'au moins une séquence d'ouverture/fermeture de ladite soupape d'échappement.

Le procédé peut consister, avant la fin de la phase d'admission, à introduire dans ladite chambre un fluide d'admission par la tubulure d'admission et à y injecter du carburant,

Le procédé peut consister à réaliser au moins une injection de carburant dans la tubulure d'échappement pendant la phase d'admission.

Le procédé peut consister à réaliser au moins une injection de carburant dans la chambre de combustion pendant la phase d'admission.

Le procédé peut consister à réaliser au moins une injection de carburant dans la chambre de combustion pendant la phase de compression qui suit la phase d'admission.

Le procédé peut consister à réaliser au moins une injection de carburant dans la chambre de combustion pendant la phase d'admission avant que le piston n'atteigne le voisinage du point mort bas.

Le procédé peut consister à réaliser au moins une injection de carburant dans la chambre de combustion avant l'ouverture de la soupape d'échappement.

Le procédé peut consister à réaliser au moins une injection de carburant dans la chambre de combustion après l'ouverture de la soupape d'échappement.

Le procédé peut consister à réaliser au moins une injection de carburant dans la chambre de combustion après la fermeture de la soupape d'échappement.

Le procédé peut consister à réaliser une succession d'ouvertures et de fermetures de la soupape d'échappement pendant la phase d'admission.

Le procédé peut consister, au voisinage du début de la phase d'admission du moteur, à ouvrir la soupape d'échappement avant la soupape d'admission.

Le procédé peut consister, au voisinage du début de la phase d'admission du moteur, à ouvrir la soupape d'échappement après la soupape d'admission.

Le procédé peut consister, au voisinage du début de la phase d'admission du moteur, à ouvrir la soupape d'échappement simultanément à l'ouverture de la soupape d'admission.

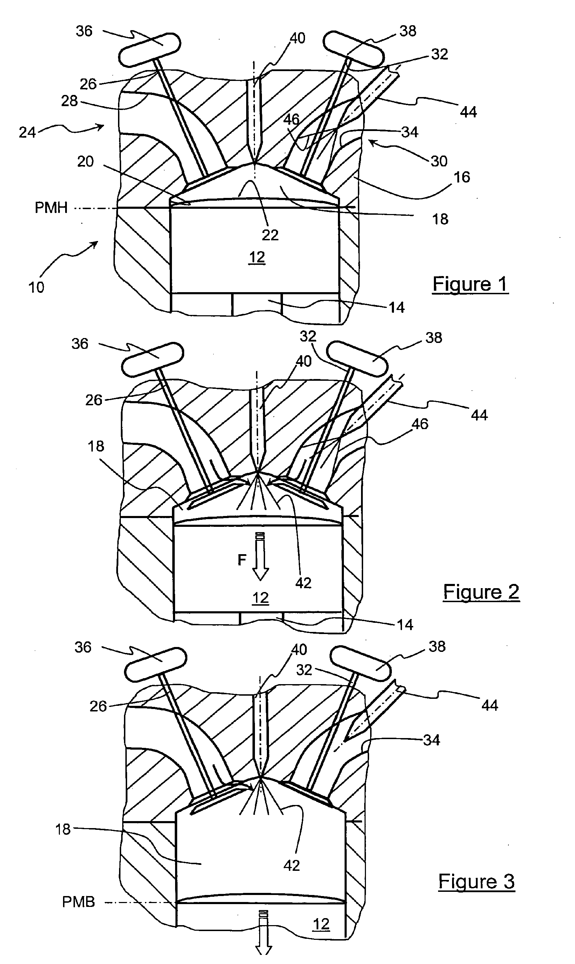

Les autres caractéristiques et avantages de l'invention seront mieux décrits à la lecture de la description qui va suivre, donnée à titre uniquement illustratif et non limitatif, et en se référant aux dessins sur lesquels les figures 1 à 3 sont des schémas d'un moteur à injection directe illustrant le déroulement des différentes étapes du procédé selon l'invention.

Sur l'exemple de figures 1 à 3, le moteur à combustion interne est un moteur à combustion interne à quatre temps (ou quatre phases) avec une phase d'admission, de compression, de combustion (ou de détente) et une phase d'échappement. Ce moteur est notamment de type à injection directe Diesel pouvant fonctionner selon deux modes de combustion, un mode au moins en partie homogène et/ou un mode conventionnel.

Ce moteur comprend au moins un cylindre 10 à l'intérieur duquel coulisse un piston 12 dans un mouvement alternatif rectiligne entre un point mort haut (PMH) et un point mort bas (PMB) sous l'effet d'une bielle 14 commandée par un vilebrequin (non représenté). Ce cylindre comprend, en partie haute, une culasse 16 qui permet de délimiter une chambre de combustion 18 formée par la paroi latérale 20 du cylindre 10, la face de la culasse 16 en regard du piston et la surface supérieure 22 du piston.

Par chambre de combustion, il est compris non seulement le volume défini ci-dessus mais également ce volume additionné du volume formé par un éventuel bol creux concave logé au sommet du piston.

La culasse porte des moyens d'admission 24 avec au moins une soupape d'admission 26 contrôlant une tubulure d'admission 28 débouchant dans la chambre de combustion 18. Cette culasse porte également des moyens d'échappement 30 avec au moins une soupape d'échappement 32 et une tubulure d'échappement 34 communiquant également avec la chambre de combustion.

La soupape d'admission 26 est préférentiellement commandée par des moyens de contrôle 36 conventionnels, comme un arbre à cames entraîné en rotation par le vilebrequin au travers d'une chaîne de distribution ou d'une courroie de distribution (non représentée).

La soupape d'échappement 32 est commandée en ouverture/fermeture par des moyens de contrôle 38 permettant de faire une ou plusieurs nouvelles séquences d'ouverture/fermeture de cette soupape. Ces moyens peuvent également faire varier les lois de levée de cette soupape, tant au niveau de son moment d'ouverture/fermeture qu'au niveau de sa levée, et cela indépendamment de la soupape d'admission. Ces moyens sont plus connus sous le sigle de VVA (Variable Valve Actuation), VVT (Variable Valve Timing) ou VVL (Variable Valve Lift).

Bien entendu, il peut être aussi envisagé de contrôler la soupape d'admission par des moyens permettant de faire varier sa loi de levée, comme mentionné ci-dessus.

Il peut également être envisagé de contrôler la soupape d'échappement et éventuellement la soupape d'admission par des moyens de contrôle, dits "camless", qui ne comportent aucun arbre à cames. Dans ce cas, le moteur comprend des moyens d'actionnement dédiés à chaque soupape, comme un actionneur à commande électromagnétique ou hydraulique ou électrohydraulique ou pneumatique ou électropneumatique, qui agit directement ou indirectement sur la tige des soupapes.

Dans l'exemple décrit dans la suite de la description, la soupape d'admission 26 est contrôlée en ouverture/fermeture par un arbre à cames standard alors que la soupape d'échappement 26 est contrôlée par des moyens permettant de réaliser au moins une nouvelle séquence d'ouverture/fermeture de cette soupape après sa séquence conventionnelle d'ouverture/fermeture.

Le moteur comprend également des moyens d'injection directe de carburant 40, de préférence sous la forme d'un injecteur, qui projettent du carburant à l'intérieur de la chambre de combustion 18 selon un agencement d'au moins un jet de carburant 42 (voir figure 2 ou 3).
Ce moteur comprend en outre des moyens d'injection indirecte de carburant 44, de préférence sous la forme d'un injecteur, qui projettent du carburant dans la tubulure d'échappement 34 et en aval de la soupape d'échappement 32 en considérant le sens habituel de circulation des gaz d'échappement de la chambre de combustion vers cette tubulure. Avantageusement, cette injection de carburant se réalise selon au moins un jet de carburant 46 de façon à y réaliser un mélange carburé avec les gaz d'échappement qui sont contenus dans cette tubulure.

Les moyens de contrôle 38 de la soupape d'échappement 32 ainsi que les moyens d'injection directe 40 et indirecte 44 de carburant sont contrôlés par un calculateur moteur (non représenté), que comporte habituellement un moteur. Bien entendu, dans le cas où les moyens de contrôle 36 de la soupape d'admission 26 sont des moyens de type permettant de faire varier les lois de levées de ces soupapes, le calculateur contrôlera également ces moyens.

Ce calculateur contient des cartographies ou des tables de données qui permettent de faire fonctionner le moteur, soit en mode au moins en partie homogène, soit en mode conventionnel en fonction des paramètres qu'il traite.
Plus particulièrement, ce calculateur permet de contrôler les séquences d'ouverture/fermeture des soupapes ainsi que les paramètres d'injection de carburant (moment d'injection dans le cycle du moteur, la durée d'injection de carburant...), soit dans la tubulure d'échappement, soit dans la chambre de combustion, soit dans les deux.

La description du procédé qui va suivre se fera en relation avec les figures 1 à 3.

La figure 1 montre la configuration du moteur à la fin de la phase d'échappement de ce moteur pour un fonctionnement en mode au moins en partie homogène.
Dans cette configuration, le piston 12 est dans une position correspondante à son point mort haut échappement (PMH) et la chambre de combustion 18 renferme des gaz d'échappement chauds résultant de la combustion du mélange carburé lors la phase précédente de détente du moteur. La soupape d'admission 26 est en position de fermeture de la tubulure d'admission 28 alors que la soupape d'échappement 32 vient de fermer la tubulure d'échappement 34 qui contient, de ce fait, des gaz d'échappement chauds.

A partir de cette position et après quelques degrés de rotation de vilebrequin qui correspond au début de la phase d'admission du moteur, le calculateur commande l'injecteur indirect 44 de manière à ce qu'il injecte du carburant (en une ou plusieurs étapes) dans les gaz d'échappement présents dans la tubulure d'échappement 34 ainsi que l'ouverture de la soupape d'échappement 32.

Bien entendu, cette injection de carburant et cette ouverture de soupape d'échappement peuvent se faire simultanément ou de manière décalée l'une par rapport à l'autre.

Le carburant injecté se vaporise rapidement dans la tubulure d'échappement 34 grâce à la chaleur des gaz d'échappement qui y sont contenus et un mélange de gaz d'échappement et de carburant vaporisé est de ce fait présent dans cette tubulure juste en aval de la soupape d'échappement.

Comme illustré à la figure 2, cette phase d'admission se continue avec le piston qui a une course, selon la flèche F, de son PMH jusqu'à son PMB.

Pendant cette phase, la soupape d'admission 26 suit une séquence d'ouverture/fermeture sous l'action de l'arbre à cames 36 et cela du point mort haut de ce piston jusqu'à son point mort bas.

Durant cette course et compte tenu de la séquence d'ouverture/fermeture de la soupape d'échappement, un mélange de gaz d'échappement et de carburant vaporisé est aspiré au travers de la soupape d'échappement 32 pour être admis dans la chambre de combustion 18. De même, un fluide d'admission est introduit dans la chambre de combustion 18 par la tubulure d'admission 28 au travers de la soupape d'admission 26 lors de sa séquence d'ouverture/fermeture.

Par fluide d'admission, il est aussi bien entendu de l'air à pression ambiante, ou de l'air suralimenté, qui est comprimé par un turbocompresseur par exemple, ou un mélange de cet air (suralimenté ou non) avec des gaz d'échappement recirculés.

Durant cette phase d'admission, Il peut être prévu de réaliser une succession de séquences d'ouverture/fermeture de la soupape d'échappement associée à une ou plusieurs injections de carburant dans les gaz d'échappement contenus dans la tubulure et ce avant la fin de la phase d'admission.

Ainsi, tout ou partie du mélange gaz d'échappement-carburant vaporisé initialement contenu dans la tubulure d'échappement 32 est réintroduit dans la chambre de combustion 16 au travers de la soupape d'échappement sans pour cela mouiller la paroi 18 du cylindre.

Le calculateur peut commander également, pendant cette phase d'admission, au moins une injection de carburant dans la chambre de combustion par l'intermédiaire de l'injecteur direct 40.

Cette injection de carburant dans les gaz d'échappement encore chauds a pour effet de vaporiser ce carburant tout en réduisant significativement le contact entre le carburant liquide et la paroi du cylindre.
Cette injection directe de carburant peut aussi se poursuivre pendant cette phase d'admission.
Bien entendu et cela sans sortir du cadre de l'invention, il peut être prévu d'ouvrir en premier lieu la soupape d'échappement de façon à réintroduire le mélange gaz d'échappement-carburant vaporisé dans la chambre de combustion puis d'ouvrir la soupape d'admission et enfin d'injecter le carburant dans le mélange ainsi formé tout en profitant de la chaleur contenue dans les gaz d'échappement pour vaporiser le carburant introduit.

Bien entendu, toutes autres configurations entre ces deux soupapes ne sont pas écartées, comme une ouverture simultanée de celles-ci au début de la phase d'admission.

De même, cette injection directe de carburant peut se produire simultanément, avant ou après de l'introduction dans la chambre du mélange gaz d'échappement-carburant vaporisé contenu dans la tubulure d'échappement.

A la fin de cette phase d'admission (figure 3), le piston 12 se trouve au voisinage du PMB, l'injection de carburant dans la tubulure d'échappement est stoppée et la soupape d'échappement 32 est en position de fermeture de la tubulure 34 qu'elle contrôle.

Grâce à cela, le mélange obtenu dans la chambre 18 lors de la fermeture de la soupape d'admission 26 à la fin de la phase d'admission est un mélange carburé essentiellement homogène contenant de l'air, des gaz d'échappement et du carburant vaporisé.

Comme cela est connu, le mode opératoire du moteur se poursuit par une phase de compression du mélange carburé avec possibilité de poursuivre les injections directes de carburant et la combustion du mélange carburé.

Alternativement à ce qui a été évoqué ci-dessus, il peut être prévu de ne pas injecter de carburant par l'injecteur direct 40 dans la chambre de combustion 18 pendant la phase d'admission si la quantité de carburant contenue dans le mélange gaz d'échappement-carburant vaporisé réintroduit par la tubulure d'échappement est suffisante pour assurer l'autoinflammation du mélange pendant la phase de combustion de ce moteur

Egalement, il peut être envisagé de ne pas injecter de carburant par l'injecteur direct 40 dans la chambre de combustion pendant la phase d'admission mais de réaliser cette opération d'injection de carburant uniquement pendant la phase de compression de façon à obtenir un mélange essentiellement homogène en fin de phase de compression et avant la phase de combustion du moteur.
Ceci permet de vaporiser le carburant injecté non seulement grâce à la présence dans la chambre de combustion du mélange gaz d'échappement-carburant vaporisé mais également grâce à la chaleur dégagée lors de la compression du mélange air et gaz d'échappement-carburant vaporisé.

Bien entendu, l'homme du métier fera en sorte de paramétrer le calculateur de façon à ce qu'il contrôle la fermeture de la soupape d'échappement durant la phase d'admission du moteur pour que la quantité de gaz d'échappement présente dans la chambre de combustion à la fin de cette phase d'admission n'altère pas la combustion du mélange carburé.

La présente invention n'est pas limitée aux exemples de réalisation décrits ci-dessus mais englobe toutes variantes et tous équivalents.

## Revendications

1. Procédé pour améliorer la vaporisation d'un carburant utilisé pour un moteur à combustion interne, pouvant fonctionner selon un mode conventionnel et/ou selon un mode au moins en partie homogène avec une phase d'admission, de compression, de combustion et d'échappement, ledit moteur comportant au moins un cylindre (10), une chambre de combustion (18), des moyens d'admission (24) avec au moins une soupape d'admission (26) associée à un tubulure d'admission (28), des moyens d'échappement (30) avec au moins une soupape d'échappement (32) et une tubulure d'échappement (34), des moyens de contrôle (36, 38) en ouverture/fermeture des soupapes et des moyens d'injection de carburant (40, 44), **caractérisé en ce qu'**il consiste :
- à la fin de la phase d'échappement, à réaliser au moins une injection de carburant dans la tubulure d'échappement (34) pour y produire un mélange avec les gaz d'échappement,
- au début de la phase d'admission, à introduire au moins partiellement le mélange ainsi formé dans la chambre de combustion (18),
- avant la fin de la phase d'admission, à fermer la soupape d'échappement (32),
- à la fin de la phase d'admission, à fermer la soupape d'admission (26).

2. Procédé selon la revendication 1, **caractérisé en ce qu'**il consiste, à fermer la soupape d'échappement (32) à la fin de la phase d'échappement et à introduire au moins partiellement le mélange, au début de la phase d'admission, lors d'au moins une séquence d'ouverture/fermeture de ladite soupape d'échappement.

3. Procédé selon la revendication 1 ou 2, **caractérisé en ce qu'**il consiste, avant la fin de la phase d'admission, à introduire dans ladite chambre un fluide d'admission par la tubulure d'admission (28) et à y injecter du carburant,

4. Procédé selon l'une des revendications précédentes, **caractérisé en ce qu'**il consiste à réaliser au moins une injection de carburant dans la tubulure d'échappement (34) pendant la phase d'admission.

5. Procédé selon l'une des revendications précédentes, **caractérisé en ce qu'**il consiste à réaliser au moins une injection de carburant dans la chambre de combustion (18) pendant la phase d'admission.

6. Procédé selon l'une des revendications précédentes, **caractérisé en ce qu'**il consiste à réaliser au moins une injection de carburant dans la chambre de combustion pendant la phase de compression qui suit la phase d'admission.

7. Procédé selon la revendication 1 à 5, **caractérisé en ce qu'**il consiste à réaliser au moins une injection de carburant dans la chambre de combustion (16) pendant la phase d'admission avant que le piston (12) n'atteigne le voisinage du point mort bas.

8. Procédé selon l'une des revendications précédentes, **caractérisé en ce qu'**il consiste à réaliser au moins une injection de carburant dans la chambre de combustion avant l'ouverture de la soupape d'échappement (32).

9. Procédé selon l'une des revendications précédentes, **caractérisé en ce qu'**il consiste à réaliser au moins une injection de carburant dans la chambre de combustion après l'ouverture de la soupape d'échappement (32).

10. Procédé selon l'une des revendications précédentes, **caractérisé en ce qu'**il consiste à réaliser au moins une injection de carburant dans la chambre de combustion après la fermeture de la soupape d'échappement (32).

11. Procédé selon l'une des revendications précédentes, **caractérisé en ce qu'**il consiste à réaliser une succession d'ouvertures et de fermetures de la soupape d'échappement (32) pendant la phase d'admission.

12. Procédé selon l'une des revendications précédentes, **caractérisé en ce qu'**il consiste, au voisinage du début de la phase d'admission du moteur, à ouvrir la soupape d'échappement (32) avant la soupape d'admission (26).

13. Procédé selon l'une des revendications 1 à 11, **caractérisé en ce qu'**il consiste, au voisinage du début de la phase d'admission du moteur, à ouvrir la soupape d'échappement (32) après la soupape d'admission (26).

14. Procédé selon l'une des revendications 1 à 11, **caractérisé en ce qu'**il consiste, au voisinage du début de la phase d'admission du moteur, à ouvrir la soupape d'échappement (32) simultanément à l'ouverture de la soupape d'admission (26).
